# EUROPÄISCHE PATENTSCHRIFT

(11) **EP 2 582 564 B1**
(45) Veröffentlichungstag und Bekanntmachung des Hinweises auf die Patenterteilung: **26.02.2014**
(21) Anmeldenummer: 11722081.4
(22) Anmeldetag: 31.05.2011
(51) Int. Cl.: B62D 15/02, B60W 30/06

(54) **PARKHILFESYSTEM ZUR DURCHFÜHRUNG VON PARKMANÖVERN MIT LENKEINGRIFF**
PARKING ASSISTANCE SYSTEM FOR CARRYING OUT PARKING MANOEUVRES WITH STEERING INTERVENTION
SYSTÈME D'AIDE AU PARCAGE POUR RÉALISER DES MANOEUVRES DE PARCAGE AVEC CORRECTION DE LA DIRECTION

(30) Priorität: 16.06.2010 DE 102010030144
(43) Veröffentlichungstag der Anmeldung: 24.04.2013
(73) Patentinhaber: Robert Bosch GmbH, 70442 Stuttgart (DE)
(72) Erfinder: GRUETZMANN, Andreas, 70176 Stuttgart (DE); SCHNEIDER, Marcus, 71642 Ludwigsburg (DE)
(86) Internationale Anmeldenummer: PCT/EP2011/058875
(87) Internationale Veröffentlichungsnummer: WO 2011/157540

(56) Entgegenhaltungen:
- EP-A2- 1 867 557

## Beschreibung

### Stand der Technik

Die Erfindung betrifft ein Verfahren zur automatischen Unterstützung bei der Durchführung eines Parkmanövers mit Lenkeingriff, sowie ein entsprechendes Parkhilfesystem.

Parkhilfesysteme, beispielsweise Einpark- bzw. Ausparkassistenten, unterstützen den Fahrer beim Ein- bzw. Ausparken seines Fahrzeugs. So wird beispielsweise beim Einparken der Fahrer in eine Parklücke geführt. Das Führen kann dabei in passiver Form geschehen, d.h. der Fahrer bekommt Lenkwinkelvorgaben sowie Losfahr- und Anhaltebefehle übermittelt. Der Einparkassistent kann aber das Einparken auch aktiv übernehmen, wobei der Fahrer lediglich Losfahr- bzw. Anhaltevorgaben erhält und eine Führung mindestens teilweise automatisch durch das System vorgenommen wird. Hierbei wird bei einer Längsführung das Brems- und Antriebssystem des Fahrzeugs automatisch angesteuert. Bei einer Querführung steuert der Einparkassistent automatisch eine Lenksteuerung an. Für ein assistiertes Ausparken gilt Entsprechendes.

Bei einem automatisch gelenkten Ein- bzw. Ausparken führt beispielsweise eine elektrische Servolenkungseinheit ("Electric Power Steering", EPS) ein aktives Lenken nach links und/oder rechts anstelle des Fahrers durch. Der Stromverbrauch etwa einer EPS ist vergleichsweise hoch, so treten bei einem üblichen 12V-Bordnetz Ströme bis zu 80 Ampere auf. Je höher allerdings die fließenden Ströme sind, desto schneller und stärker erhitzt sich der elektrische Antrieb und/oder die Leistungselektronik der EPS. Bei zu hohen Temperaturen können der elektrische Antrieb und/oder die Leistungselektronik Schaden nehmen. Unter anderem aus diesem Grund reduziert eine EPS ihre Lenkunterstützung, wenn die Gefahr einer Überhitzung besteht. Die Lenkunterstützung kann nur um wenige Prozent reduziert werden; eine Reduktion kann aber auch bis zu 100 Prozent gehen, d.h. in diesem Fall erfolgt gar keine Lenkunterstützung mehr. Somit werden auch Lenkanforderungen von externen Komponenten wie z. B. einem Einpark- bzw. Ausparkassistenten nur noch teilweise oder gar nicht mehr umgesetzt. Dies führt zu weiteren Problemen; wird etwa die Differenz zwischen angefordertem Lenkwinkel und tatsächlichem Lenkwinkel zu groß, wird dies als Fehler interpretiert, was zum Abbruch der Unterstützung für das betroffene Fahrmanöver führt.

Der Stromverbrauch einer EPS hängt unter anderem von zwei Einflussgrößen ab:
1. Von der Lenkgeschwindigkeit: Je höher die Lenkgeschwindigkeit, desto höher der Stromverbrauch.
2. Vom Lenkwinkel: Je größer der Lenkwinkel, desto höher ist auch der Stromverbrauch. Nahe einem Volleinschlag steigt der Stromverbrauch sogar überproportional an.

Daher werden üblicherweise automatische Lenkmanöver nur mit reduzierter Lenkgeschwindigkeit angefordert, bspw. nur bis zu 70 % der maximal möglichen Lenkgeschwindigkeit, und auch nicht bis zum Volleinschlag, sondern bspw. nur bis zu 80 % des maximal möglichen Volleinschlags. Durch derartige Maßnahmen wird der Stromverbrauch und damit die Gefahr einer Überhitzung verringert. Somit kann eine EPS beispielsweise für eine häufigere Anzahl Zyklen die Lenkanforderungen ausreichend umsetzen.

Allerdings wird basierend auf derartigen Randbedingungen aus Fahrersicht das Lenkverhalten träger und auch objektiv ineffizienter, da beispielsweise in vielen Situationen mehr Vorwärts-/Rückwärtszüge notwendig sind, als es bei Anwendung von Volleinschlägen und/oder maximaler möglicher Lenkgeschwindigkeit der Fall wäre.

Weiterhin offenbart die EP1867557A2 ein Verfahren mit den Merkmalen des Oberbegriffs des Anspruchs 1.

### Offenbarung der Erfindung

Erfindungsgemäß wird ein Verfahren zur automatischen Unterstützung bei der Durchführung eines Parkmanövers mit Lenkeingriff vorgeschlagen, welches die folgenden Schritte umfasst: Ermitteln einer Geschwindigkeit eines Fahrzeugs; Berechnen einer Steuergröße basierend auf der ermittelten Geschwindigkeit, wobei die Steuergröße entweder eine Lenkgeschwindigkeit, einen Lenkradwinkel, oder beides umfasst; und Ansteuern einer Lenksteuerung des Fahrzeugs basierend auf der berechneten Steuergröße zur unterstützten Durchführung des Parkmanövers, wobei in einem bestimmten Bereich der Fahrzeuggeschwindigkeit ein maximaler Wert der Steuergröße mit zunehmender Geschwindigkeit ansteigt.

Das Parkmanöver kann ein Einparken oder ein Ausparken umfassen. Die ermittelte Geschwindigkeit kann eine Rollgeschwindigkeit des Fahrzeugs sein.

Die Steuergröße kann entweder eine maximale Lenkgeschwindigkeit, einen maximalen Lenkradwinkel, oder beides umfassen. Bei einer Ausführungsform des erfindungsgemäßen Verfahrens basiert die Berechnung der Steuergröße auf einer Fahrtrichtung des Fahrzeugs.

Die Steuergröße kann derart berechnet werden, dass ein Stromverbrauch bei einer automatischen Betätigung der Lenkung einen vordefinierten maximalen Stromverbrauch nicht überschreitet.

Erfindungsgemäß wird ferner ein Computerprogramm vorgeschlagen, welches zur Durchführung eines der hierin beschriebenen Verfahrens führt, wenn das Computerprogramm auf einer programmierbaren Computereinrichtung ausgeführt wird, bspw. einem Parkhilfesystem eines Fahrzeugs. Das Computerprogramm kann auf einem maschinenlesbaren Datenträger gespeichert sein, bspw. einem permanenten oder wiederbeschreibbaren Medium in oder in Zuordnung zu einer programmierbaren Computereinrichtung oder einer CD-ROM, DVD oder einem USB-Stick. Zusätzlich oder alternativ kann das Computerprogramm zum Herunterladen auf eine programmierbare Computereinrichtung bereitgestellt werden, zum Beispiel über ein Datennetzwerk wie das Internet oder eine Kommunikationsverbindung wie etwa eine Telefonleitung oder eine drahtlose Verbindung.

### Vorteile der Erfindung

Die Erfindung ermöglicht eine Reduktion des Stromverbrauchs und damit einhergehend eine Verringerung der Überhitzungsgefahr einer automatischen Lenkung. Gleichzeitig ist jedoch das automatische Lenkverhalten gegenüber dem Stand der Technik dynamischer und effizienter, d.h. die Trägheit einer automatischen Querführung ist geringer und die Anzahl der notwendigen Züge für ein Ein- bzw. Ausparken wird in vielen Situationen nicht oder nicht merklich erhöht sein.

Darüber hinaus erhöht sich die Verfügbarkeit der Lenkung bspw. in Bezug auf Parkmanöver, die nur mit maximaler Lenkgeschwindigkeit und/oder maximalem Lenkradeinschlag durchführbar sind. Alternativ oder zusätzlich erhöht sich die Verfügbarkeit auch dadurch, dass eine automatische Querführung auch für eine größere Anzahl Zyklen eingesetzt werden kann, da sich die Überhitzung, wenn überhaupt, erst über einen längeren Zeitraum bzw. eine größere Anzahl Zyklen aufbaut. Somit sind Parkmanöver durchführbar, die mehrere Züge umfassen, bei denen es herkömmlich zu einer Überhitzung der automatischen Lenkungseinrichtung und gegebenenfalls sogar zum Abbruch eines automatisch geführten Manövers kommen würde.

Die Erfindung ist einfach umsetzbar und erfordert bspw. keine Modifikationen an existierenden Lenkungssteuerungen wie etwa einer EPS. Eine Geschwindigkeit, wie beispielsweise eine Rollgeschwindigkeit des Fahrzeugs, wird oft schon durch ohnehin vorhandene Sensoren ermittelt, beispielsweise für Fahrerassistenzsysteme wie etwa ein automatisches Antiblockiersystem (ABS).

Somit kann insgesamt mit der Erfindung ein Betrieb einer automatischen Lenkung, etwa in Bezug auf Stromverbrauch, Lebensdauer und Verfügbarkeit einerseits und Lenkverhalten einer automatischen Querführung andererseits, in Bezug auf konkrete Fahrzeugtypen, geplante Einsatzsituationen, etc. hin optimiert werden.

### Kurze Beschreibung der Zeichnungen

Weitere Aspekte und Vorteile der Erfindung werden nunmehr anhand der beigefügten Figuren eingehender beschrieben. Hierbei zeigt:
- Figur 1: in Form eines schematischen Blockschaltbildes funktionale Komponenten eines Ausführungsbeispiels eines erfindungsgemäßen Einparksystems,
- Figur 2: in Form eines Flussdiagramms eine Arbeitsweise des Einparksystems der Figur 1,
- Figur 3: ein Beispiel für eine Abhängigkeit eines maximalen Lenkradwinkels von einer Fahrzeug-Rollgeschwindigkeit bei einer automatischen Querführung,
- Figur 4: ein Beispiel für eine Abhängigkeit einer Lenkgeschwindigkeit von einer Fahrzeug-Rollgeschwindigkeit bei einer automatischen Querführung.

### Ausführungsformen der Erfindung

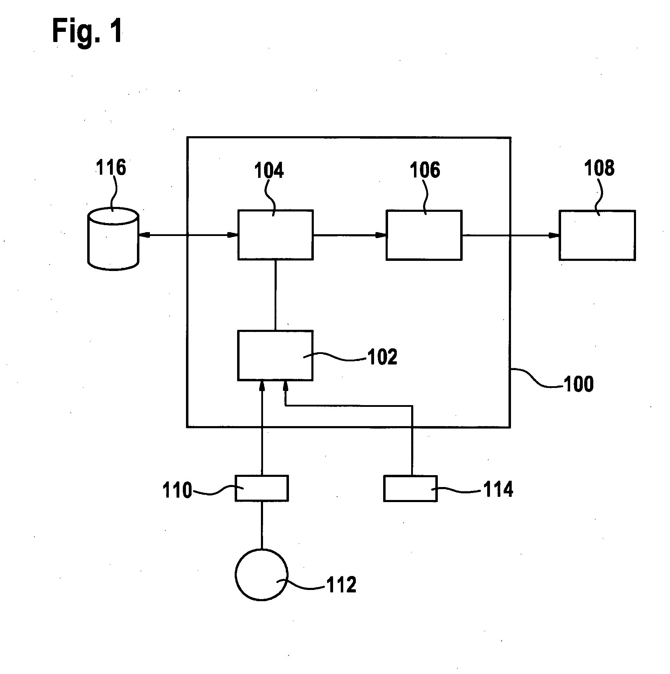

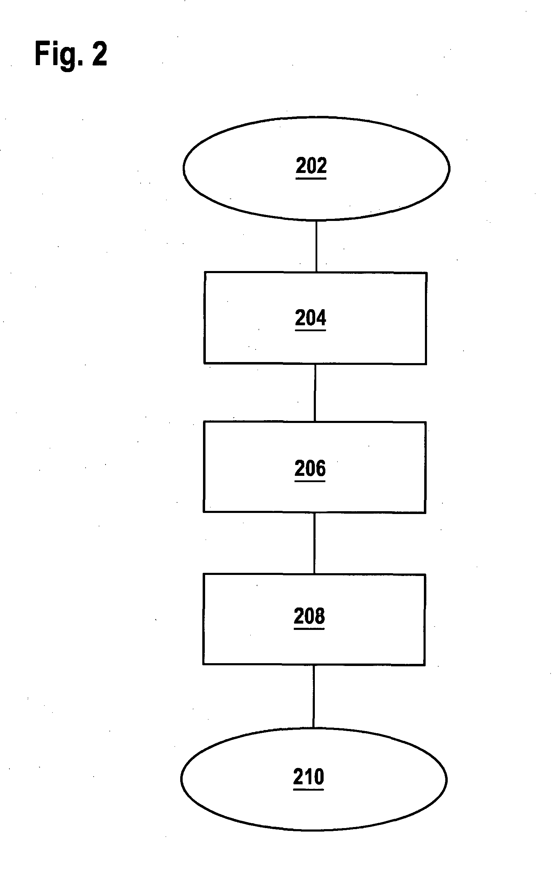

Figur 1 zeigt in schematischer Form ein Ausführungsbeispiel eines erfindungsgemäßen Parkhilfesystems 100, welches eine automatische Querführung bei der Durchführung eines Parkmanövers unterstützt. Das System 100 umfasst eine Ermittlungseinheit 102, eine Berechnungseinheit 104 und eine Ausgabeeinheit 106 zur Ansteuerung einer elektrischen Servolenkung EPS 108 eines Fahrzeugs. Eine Funktionsweise des Systems 100 wird nachfolgend anhand des Flussdiagramms in Figur 2 eingehender beschrieben. Der in Figur 2 skizzierte Ablauf betrifft eine automatische Unterstützung bei der Durchführung eines Parkmanövers mit Lenkeingriff (202).

In Schritt 204 ermittelt die Ermittlungseinheit 102 eine Geschwindigkeit des Fahrzeugs. Hierzu nimmt die Einheit 102 entsprechende Daten von einem Sensorsystem 110 entgegen, welches beispielsweise eine Rollgeschwindigkeit des Fahrzeugs anhand einer Überwachung von einem oder mehreren Rädern 112 des Fahrzeugs ermittelt. Der Schritt 204 kann weiterhin die Ermittlung einer Fahrtrichtung umfassen, beispielsweise basierend auf Daten eines Fahrtrichtungssensors 114. Die Ermittlungseinheit 102 kann Sensordaten von den Sensoren 110 und 114 entweder aktiv anfordern oder die Daten werden von den Sensoren automatisch zugeliefert.

Die Ermittlungseinheit 102 stellt die Daten der Berechnungseinheit 104 zur Verfügung, die in Schritt 206 basierend auf der ermittelten Geschwindigkeit und/oder einer ermittelten

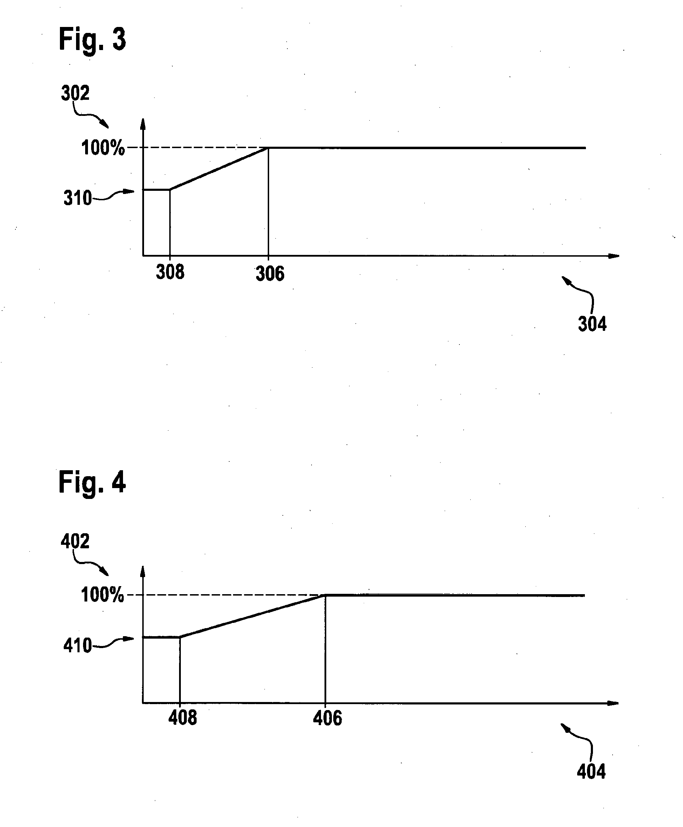

Fahrtrichtung des Fahrzeugs eine Steuergröße berechnet. Bei dieser Steuergröße kann es sich um eine Lenkgeschwindigkeit handeln, einen Lenkradwinkel, oder beides. Der Schritt 206 wird weiter unten anhand der Figuren 3 und 4 genauer diskutiert.

Die Berechnungseinheit 104 stellt die berechnete Steuergröße der Ausgabeeinheit 106 bereit, welche basierend auf der berechneten Steuergröße die Lenksteuerung 108 des Fahrzeugs zur unterstützten Durchführung eines Parkmanövers ansteuert. Das Parkmanöver kann ein Einparken oder ein Ausparken umfassen. Die Aktivität des Parkhilfesystems 100 endet in Schritt 210. Zur vollständigen Durchführung eines Ein- oder Ausparkmanövers kann der in Figur 2 skizzierte Ablauf mehrfach durchgeführt werden. Dies kann bis hin zu einer quasi-kontinuierlichen Arbeitsweise des Systems 100 gehen, bei der beispielsweise basierend auf einer vorausberechneten Trajektorie eine momentane Korrektur bzw. Neuberechnung der momentan optimalen Trajektorie erfolgt (Regelung).

Die Berechnung der Steuergröße in der Berechnungseinheit 104 in Schritt 206 kann beispielsweise auf in einer Speichereinheit 116 in Zuordnung zum Parkhilfesystem 100 abgelegten Datensätzen basieren. Solche Datensätze können bspw. in Form von Tabellen und/oder als funktionale Zusammenhänge abgelegt sein. Derartige Zusammenhänge sind beispielhaft in den Figuren 3 und 4 veranschaulicht.

In Figur 3 ist ein denkbarer Zusammenhang zwischen Lenkradwinkel 302 und einer Rollgeschwindigkeit des Fahrzeugs 304 dargestellt. Die Berechnungseinheit 104 kann diesen Zusammenhang nutzen, um aus einer von der Einheit 102 ermittelten Rollgeschwindigkeit des Fahrzeugs einen maximalen Lenkradwinkel zu bestimmen. In dem Bespiel der Figur 3 beträgt der verfügbare maximale Lenkradwinkel 100 % oberhalb einer vorgegebenen Geschwindigkeit 306, d.h. bei einer Geschwindigkeit des Fahrzeugs bei oder über der Geschwindigkeit 306 kann eine automatische Querführung den technisch maximal möglichen Lenkradwinkel des Fahrzeugs nutzen, um ein Ein- bzw. Ausparken zu planen und/oder durchzuführen. Unterhalb der Geschwindigkeit 306 ist der maximal zulässige Lenkradwinkel 302 geringer als 100 % und erreicht bei einer vorgegebenen Wert 308 oder einer noch kleineren Rollgeschwindigkeit einen konstanten minimalen Wert.

In Figur 4 ist ein Beispiel für einen Zusammenhang zwischen einer maximalen Lenkgeschwindigkeit 402 und einer Rollgeschwindigkeit 404 des Fahrzeugs dargestellt, wie er als Tabelle oder als Funktion im Speicher 114 abgelegt sein könnte. Oberhalb einer vorgegebenen Geschwindigkeit 406 kann das Einparksystem die maximal mögliche Lenkgeschwindigkeit (100 %) des konkreten Fahrzeugtyps verwenden, d.h. die EPS 108 entsprechend ansteuern. Unterhalb der Geschwindigkeit 406 wird die maximale Lenkgeschwindigkeit kleiner und beträgt bei einem Wert 408 oder weniger der Fahrzeuggeschwindigkeit nur noch oder einen konstanten Minimalwert. Die Geschwindigkeiten 406 und 408 müssen nicht notwendigerweise mit den Fahrzeuggeschwindigkeiten 306 und 308 aus Figur 3 übereinstimmen.

In dem hier diskutierten Beispiel seien die in den Figuren 3 und 4 veranschaulichten Zusammenhänge im Speicher 114 abgelegt und werden durch entsprechenden Zugriff von der Berechnungseinheit 104 für die Berechnung einer Steuergröße verwendet, die sowohl eine Lenkgeschwindigkeit als auch einen Lenkradwinkel umfasst. Dann ergibt sich beispielsweise folgendes Verhalten: Wenn das Fahrzeug steht bzw. sich mit geringer Geschwindigkeit bewegt (Fahrzeuggeschwindigkeit 304 bzw. 404 = 0 bzw. kleiner als 308 und/oder 408), wird als maximaler Lenkradwinkel des Lenkrades bzw. Lenkwinkel der Fahrzeugräder nur der Anteil 310 des maximal möglichen Lenkwinkels 302 angefordert, d.h. es erfolgt maximal ein Teileinschlag. Alternativ oder zusätzlich wird auch nur eine geringere (410) als die technisch maximal mögliche Lenkgeschwindigkeit 402 von der Lenkung 108 angefordert. Hierdurch wird der Stromverbrauch reduziert und demzufolge auch die Überhitzungsgefahr der EPS 108.

Sobald das Fahrzeug die Minimalgeschwindigkeit 308 bzw. 408 überschreitet, wird der zur Ansteuerung verwendete, maximale Lenkradwinkel 302 bzw. die zur Ansteuerung verwendete maximale Lenkgeschwindigkeit 402 entsprechend den in den Fig. 3 und/oder 4 dargestellten Zusammenhängen größer, bis bei einer Rollgeschwindigkeit 306 bzw. 406 jeweils der technisch maximal verfügbare Lenkradwinkel 302 und/oder die technisch maximal verfügbare Lenkgeschwindigkeit 402 für eine automatische Querführung zur Ansteuerung verwendet werden kann.

Die in den Figuren 3 und 4 gezeigten Abhängigkeiten sind dadurch motiviert, dass bei Fahrzeugstillstand oder sehr geringer Geschwindigkeit die größten Reibungskräfte auftreten, die sich jedoch bei zunehmender Geschwindigkeit verringern. Derartige Zusammenhänge gelten nicht nur für die Lenkgeschwindigkeit, sondern auch für den Lenkradwinkel. Konkret können von einer Fahrzeuggeschwindigkeit abhängige (maximale) Lenkradwinkel bzw. Lenkgeschwindigkeiten beispielsweise so gewählt werden, dass ein Stromverbrauch einer automatischen Lenkung bei abnehmender Fahrzeuggeschwindigkeit im Vergleich zu höheren Geschwindigkeiten konstant bleibt, d.h. nicht zunimmt. Statt einer Konstanz kann auch vorgesehen werden, dass der Stromverbrauch bei geringer werdender Geschwindigkeit zwar zunimmt, aber beispielsweise unter einem vorgegebenen, maximalen Stromverbrauch bleibt. Bei einer wiederum anderen Alternative kann der Zusammenhang so gewählt werden, dass ein Stromverbrauch bei abnehmender Fahrzeuggeschwindigkeit sogar abnimmt.

Die in den Figuren 3 und 4 dargestellten Zusammenhänge können fahrtrichtungsabhängig sein, d.h. im Speicher 114 könnten zwei unterschiedliche Abhängigkeiten des Lenkradwinkels von der Fahrzeuggeschwindigkeit abgelegt sein, eine für Vorwärtsfahrt und eine für Rückwärtsfahrt. Entsprechendes gilt für die Lenkgeschwindigkeit. Statt der stückweise linearen Zusammenhänge wie in den Figuren 3 und 4 könnten auch komplexere oder einfachere funktionale Abhängigkeiten definiert werden.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Verfahren zur automatischen Unterstützung bei der Durchführung eines Parkmanövers mit Lenkeingriff, mit den folgenden Schritten:
- Ermitteln (204) einer Geschwindigkeit (304, 404) eines Fahrzeugs;
- Berechnen (206) einer Steuergröße basierend auf der ermittelten Geschwindigkeit, wobei die Steuergröße entweder eine Lenkgeschwindigkeit (402), einen Lenkradwinkel (302), oder beides umfasst; und
- Ansteuern (208) einer Lenksteuerung (108) des Fahrzeugs basierend auf der berechneten Steuergröße zur unterstützten Durchführung des Parkmanövers, **dadurch gekennzeichnet, dass**
in einem bestimmten Bereich der Fahrzeuggeschwindigkeit (308 - 306, 408 - 406) ein maximaler Wert der Steuergröße mit zunehmender Geschwindigkeit ansteigt.

2. Verfahren nach Anspruch 1,
wobei das Parkmanöver ein Einparken oder ein Ausparken umfasst.

3. Verfahren nach Anspruch 1 oder 2,
wobei die ermittelte Geschwindigkeit eine Rollgeschwindigkeit (304, 404) des Fahrzeugs ist.

4. Verfahren nach einem der vorhergehenden Ansprüche, wobei die Steuergröße entweder eine maximale Lenkgeschwindigkeit, einen maximalen Lenkradwinkel, oder beides umfasst.

5. Verfahren nach einem der vorhergehenden Ansprüche,
wobei die Berechnung der Steuergröße auf einer Fahrtrichtung des Fahrzeugs basiert.

6. Verfahren nach einem der vorhergehenden Ansprüche,
wobei die Steuergröße derart berechnet wird, dass ein Stromverbrauch bei einer automatischen Betätigung der Lenkung einen vordefinierten maximalen Stromverbrauch nicht überschreitet.

7. Computerprogramm zur Durchführung des Verfahrens nach einem der vorhergehenden Ansprüche, wenn das Computerprogramm auf einer programmierbaren Computereinrichtung ausgeführt wird.

8. Maschinenlesbarer Datenträger, auf dem Instruktionen zur Durchführung eines Verfahrens nach einem der Ansprüche 1 bis 6 gespeichert sind, wenn die Instruktionen von einer Computereinrichtung ausgeführt werden.

## Claims

1. Method for automatically assisting during the execution of a parking manoeuvre with a steering intervention having the following steps:
- determining (204) a speed (304, 404) of a vehicle;
- calculating (206) a control variable on the basis of the determined speed, wherein the control variable comprises either a steering speed (402), a steering wheel angle (302) or both; and
- actuating (208) a steering assistance system (108) of the vehicle on the basis of the calculated control variable in order to execute the parking manoeuvre in an assisted fashion,
**characterized in that**
in a specific range of the vehicle speed (308 - 306, 408 - 406) a maximum value of the control variable increases as the speed rises.

2. Method according to Claim 1,
wherein the parking manoeuvre comprises parking or moving out of a parking space.

3. Method according to Claim 1 or 2,
wherein the determined speed is a rolling speed (304, 404) of the vehicle.

4. Method according to one of the preceding claims, wherein the control variable comprises either a maximum steering speed, a maximum steering wheel angle or both.

5. Method according to one of the preceding claims, wherein the calculation of the control variable is based on a direction of travel of the vehicle.

6. Method according to one of the preceding claims, wherein the control variable is calculated in such a way that a power consumption level during automatic activation of the steering does not exceed a predefined maximum power consumption level.

7. Computer program for carrying out the method according to one of the preceding claims when the computer program is run on a programmable computer device.

8. Machine-readable data carrier on which instructions for carrying out a method according to one of Claims 1 to 6 are stored when the instructions are executed by a computer device.

## Revendications

1. Procédé d'assistance automatique lors de l'exécution d'une manoeuvre de stationnement avec intervention sur la direction, comprenant les étapes suivantes :
- détermination (204) d'une vitesse (304, 404) d'un véhicule ;
- calcul (206) d'une grandeur de commande en se basant sur la vitesse déterminée, la grandeur de commande comprenant soit une vitesse de changement de direction (402), soit un angle de volant de direction (302), soit les deux ; et
- actionnement (208) d'une commande de direction (108) du véhicule en se basant sur la grandeur de commande calculée en vue de l'exécution assistée de la manoeuvre de stationnement,
**caractérisé en ce que**
dans une plage donnée de la vitesse du véhicule (308 - 306, 408 - 406), une valeur maximale de la grandeur de commande croît à mesure que la vitesse augmente.

2. Procédé selon la revendication 1, selon lequel la manoeuvre de stationnement comprend une entrée en stationnement ou une sortie de stationnement.

3. Procédé selon la revendication 1 ou 2, selon lequel la vitesse déterminée est une vitesse de roulage (304, 404) du véhicule.

4. Procédé selon l'une des revendications précédentes, selon lequel la grandeur de commande comprend soit une vitesse de changement de direction maximale, soit un angle de volant de direction maximal, soit les deux.

5. Procédé selon l'une des revendications précédentes, selon lequel le calcul de la grandeur de commande se base sur un sens de déplacement du véhicule.

6. Procédé selon l'une des revendications précédentes, selon lequel la grandeur de commande est calculée de telle sorte qu'un courant consommé lors d'un actionnement automatique de la direction ne dépasse pas un courant consommé maximal prédéfini.

7. Programme informatique pour mettre en oeuvre le procédé selon l'une des revendications précédentes lorsque le programme informatique est exécuté sur un dispositif informatique programmable.

8. Support de données lisible par machine sur lequel sont enregistrées des instructions pour la mise en oeuvre d'un procédé selon l'une des revendications 1 à 6 lorsque les instructions sont exécutées par un dispositif informatique.
